# EUROPEAN PATENT APPLICATION

(11) **EP 4 807 162 A1**
(43) Date of publication of application: **16.09.2026**
(21) Application number: 26162102.3
(22) Date of filing: 03.03.2026
(51) Int. Cl.: F02C 7/14, F02C 7/16

(54) **HEAT EXCHANGER DENSITY ION INJECTION AND RECLAIM SYSTEM**

(30) Priority: 12.03.2025 US 202519077274
(71) Applicant: RTX Corporation, Farmington, CT 06032 (US)
(72) Inventor: AVIDANE, Orin G., Lighthouse Point, FL (US)
(74) Representative: Schmitt-Nilson Schraud Waibel Wohlfrom Patentanwälte Partnerschaft mbB

(57) **Abstract**

An ion gas injection and reclamation system (10) including a heat exchanger (12) fluidly coupled with at least one flow passage; a re-valence/recirculator (36) fluidly coupled with the at least one flow passage (18, 24); an ion fluid reclaimer fluidly coupled with the re-valence/recirculator; and an injection gas comprising at least one ion fluid (18) constituent fluidly coupled with at least one of the re-valence/recirculator, the ion gas reclaimer and the at least one flow passage.

## Description

The present disclosure is directed to the improved system and process for increasing the density of a heat exchanger working fluid prior to inlet into the heat exchanger by injection of an ion gas and subsequent reclamation.

Heat exchangers employ air as a working fluid to exchange thermal energy to/from another working fluid across a heat exchanger wall separating the working fluids. The use of air as a working fluid provides many benefits. Air is plentiful and readily available for use as a working fluid. However, air has a density that may not be optimized as a working fluid.

In accordance with the present disclosure, there is provided an ion gas injection and reclamation system comprising a heat exchanger fluidly coupled with at least one flow passage; a re-valence/recirculator fluidly coupled with the at least one flow passage; an ion fluid reclaimer fluidly coupled with the re-valence/recirculator; and an injection gas comprising at least one ion fluid constituent fluidly coupled with at least one of the re-valence/recirculator, the ion gas reclaimer and the at least one flow passage.

Particular embodiments further may include at least one, or a plurality of, the following optional features, alone or in combination with each other:
A further embodiment of any of the foregoing embodiments may additionally and/or alternatively include the re-valence/recirculator is configured to pump the injection gas into the at least one flow passage.

A further embodiment of any of the foregoing embodiments may additionally and/or alternatively include the injection gas includes material properties that increase the density of the working fluid and enhance the heat transfer capacity of the working fluid.

A further embodiment of any of the foregoing embodiments may additionally and/or alternatively include the ion fluid reclaimer is configured to extract the at least one ion fluid constituent from the working fluid.

A further embodiment of any of the foregoing embodiments may additionally and/or alternatively include the re-valence/recirculator comprises a heating element, the heating element configured to maintain the working fluid and injection gas at a predetermined temperature.

A further embodiment of any of the foregoing embodiments may additionally and/or alternatively include the re-valence/recirculator comprises a reservoir, the reservoir configured to store the ion fluid constituent of the injection gas.

A further embodiment of any of the foregoing embodiments may additionally and/or alternatively include the re-valence/recirculator comprises an ionizer, the ionizer configured to ionize the ion fluid constituent in the injection gas.

In accordance with the present disclosure, there is provided a gas turbine engine heat exchanger with associated ion gas injection and reclamation system comprising the gas turbine engine heat exchanger fluidly coupled with at least one flow passage; a re-valence/recirculator fluidly coupled with the at least one flow passage; a reclaimer fluidly coupled with the re-valence/recirculator; an injection gas comprising at least one ion fluid constituent fluidly coupled with at least one of the re-valence/recirculator, the ion gas reclaimer and the at least one flow passage; wherein the re-valence/recirculator is configured to pump the injection gas into the at least one flow passage, wherein the reclaimer is configured to extract the at least one ion fluid constituent from the working fluid; and a controller in operative communication with at least one of the re-valence/recirculator, the ion gas reclaimer and sensors coupled to the at least one flow passage.

Particular embodiments further may include at least one, or a plurality of, the following optional features, alone or in combination with each other:

A further embodiment of any of the foregoing embodiments may additionally and/or alternatively include the injection gas includes material properties that increase the density of the working fluid and enhance the heat transfer capacity of the working fluid.

A further embodiment of any of the foregoing embodiments may additionally and/or alternatively include the re-valence/recirculator comprises a heating element, the heating element configured to maintain the working fluid and injection gas at a predetermined temperature, wherein the predetermined temperature is configured to maintain constituents of the working fluid and the injection gas in a gaseous state.

A further embodiment of any of the foregoing embodiments may additionally and/or alternatively include the re-valence/recirculator comprises a reservoir, the reservoir configured to store the ion fluid constituent of the injection gas.

A further embodiment of any of the foregoing embodiments may additionally and/or alternatively include the re-valence/recirculator comprises an ionizer, the ionizer configured to ionize the ion fluid constituent in the injection gas.

A further embodiment of any of the foregoing embodiments may additionally and/or alternatively include the at least one flow passage comprises at least one of a hot side flow passage and a cold side flow passage.

In accordance with the present disclosure, there is provided a process of forming an ion gas injection and reclamation system for a gas turbine engine heat exchanger comprising fluidly coupling the gas turbine engine heat exchanger with at least one flow passage; fluidly coupling a re-valence/recirculator with the at least one flow passage; fluidly coupling a reclaimer with the re-valence/recirculator; fluidly coupling an injection gas comprising at least one ion fluid constituent with at least one of the re-valence/recirculator, the ion gas reclaimer and the at least one flow passage; configuring the re-valence/recirculator to pump the injection gas into the at least one flow passage; configuring the reclaimer to extract the at least one ion fluid constituent from the working fluid; and coupling a controller in operative communication with at least one of the re-valence/recirculator, the ion gas reclaimer and sensors coupled to the at least one flow passage.

Particular embodiments further may include at least one, or a plurality of, the following optional features, alone or in combination with each other:
A further embodiment of any of the foregoing embodiments may additionally and/or alternatively include the process further comprising configuring the injection gas with material properties that increase the density of the working fluid and enhance the heat transfer capacity of the working fluid.

A further embodiment of any of the foregoing embodiments may additionally and/or alternatively includethe process further comprising forming the re-valence/recirculator with a heating element; configuring the heating element to maintain the working fluid and injection gas at a predetermined temperature; and configuring the predetermined temperature to maintain constituents of the working fluid and the injection gas in a gaseous state.

A further embodiment of any of the foregoing embodiments may additionally and/or alternatively include the process further comprising forming the re-valence/recirculator with a reservoir; and configuring the reservoir to store the ion fluid constituent of the injection gas.

A further embodiment of any of the foregoing embodiments may additionally and/or alternatively include the process further comprising forming the re-valence/recirculator with an ionizer; and configuring the ionizer to ionize the ion fluid constituent in the injection gas.

A further embodiment of any of the foregoing embodiments may additionally and/or alternatively include the process further comprising during a gas turbine engine shutdown procedure, ceasing the discharge of the at least one ion fluid constituent into the at least one flow passage; and recovering the ion fluid constituent with the reclaimer before a final engine shutdown.

A further embodiment of any of the foregoing embodiments may additionally and/or alternatively include the process further comprising during a gas turbine engine startup, heating the ion fluid constituent to fully convert the ion fluid constituent to a gaseous state.

The disclosed solution temporarily increases the density of the air used as a working fluid while the air passes through a heat exchanger. To increase the density of the air working fluid, prior to a heat exchanger air inlet, a heavy ion gas is injected into the air, which can perform additional simultaneous cooling. The ion gas can be reclaimed post-discharge from the heat exchanger via electric fields and reused for repeated injection.

Other details of the ion injection/reclamation system are set forth in the following detailed description and the accompanying drawing wherein like reference numerals depict like elements.

The above and further advantages of this disclosure may be better understood by referring to the following description in conjunction with the accompanying drawings, in which like reference numerals indicate like elements and features in the various figures. Letters may be appended to reference numbers to distinguish from reference numbers for similar features and to indicate a correspondence to other features in the drawings. For clarity, not every element may be labeled in every figure. The drawings are not necessarily to scale, emphasis instead being placed upon illustrating the principles of the disclosure.

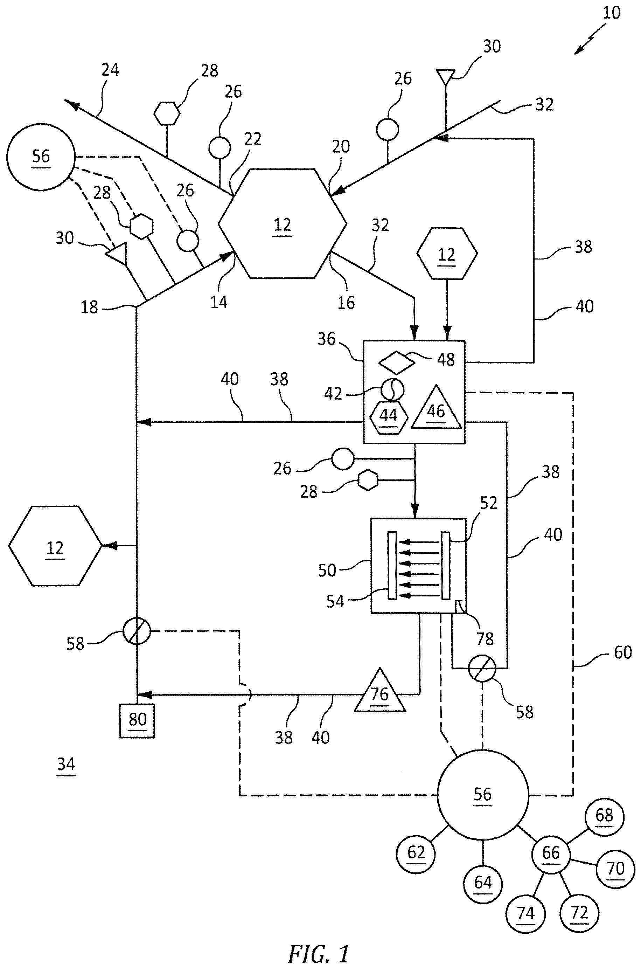

Fig. 1 is a schematic representation of an exemplary ion gas injection and reclamation system.

Referring now to the Fig. 1, showing an exemplary ion gas injection and reclamation system 10 or simply system 10. The system 10 can include at least one heat exchanger 12. Examples of heat exchanger 12 can include but not be limited to a fan duct heat exchanger and buffer air heat exchanger. The heat exchanger 12 can include a hot side inlet 14 and a hot side outlet 16 fluidly coupled to hot side flow passage(s) 18. The heat exchanger 12 can include a cold side inlet 20 and a cold side outlet 22 fluidly coupled to a cold side flow passage(s)24. The hot side flow passage 18 and cold side flow passage 24 can be in operative communication with at least one temperature sensor 26, pressure sensor 28, and flow rate sensor 30. These sensors 26, 28, 30 provide valuable data regarding a working fluid 32 flowing through any of the flow passages 18, 24. In an exemplary embodiment, the working fluid 32 can be air, fuel, oil, and the like available in a device such as a gas turbine engine 34.

The system 10 includes a re-valence/recirculator 36. The re-valence/recirculator 36 functions to recirculate/pump an injection gas 38 into the flow passages 18, 24. The injection gas 38 can have material properties that increase the density of the working fluid 32 and enhance the heat transfer capacity of the working fluid 32. If the working fluid 32 is air, the injection gas 38 can include an ion fluid/gas constituent 40. The ion gas/fluid constituent 40 can be iodine or other elements that have material properties of being dense and stable at operating temperatures of the gas turbine engine 34. Iodine is a stable and heavy Halogen with a boiling point of 363 degrees Fahrenheit and gas density of 0.703563116 lb/ft³. In contrast water has a gas density of 0.0472069 lb/ft³. The ion gas/fluid constituent 40 is not restricted to any specific chemical element, molecule, isotope, and/or combination thereof. The ion gas/fluid constituent 40 can be customized to match the particular operating conditions of the heat exchanger 12 to ensure a gaseous state is maintained.

The re-valence/recirculator 36 can include a pump 42 fluidly coupled with the flow passage 18, 24. The pump 42 circulates the working fluid 32 and injection gas 38.

The re-valence/recirculator 36 can include a heating element 44 configured to maintain the working fluid 32 and injection gas 38 at a predetermined temperature Tₚ. The predetermined temperature Tₚ can be configured to keep constituents of the working fluid 32 and injection gas 38 in a gaseous state. It is also contemplated that thermal energy Q from the gas turbine engine 34 sources can be employed to maintain the working fluid 32 and injection gas 38 at the predetermined temperature Tₚ.

The re-valence/recirculator 36 can include a reservoir 46. The reservoir 46 can be configured to store the ion gas/fluid constituent 40 of the injection gas 38. The reservoir 46 can be configured to store the ion gas/fluid 40. The reservoir 46 can store the ion gas/fluid constituent 40 as a gas or as a liquid/condensate. The reservoir 46 can store the ion gas constituent 40 until a time when further injection is needed.

The re-valence/recirculator 36 can include an ionizer 48. The ionizer 48 can be configured to ionize the ion gas/fluid constituent 40 to be available in the injection gas 38. It is contemplated that the injection gas 38 can include non-ionized or partially ionized ion gas/fluid constituents 40 upon injection into the working fluid 32 and become ionized after passing through the ionizer 48 during circulation through the flow passages 18, 24. The ionizer 48 can be configured to deploy electromagnetic radiation techniques to select the frequency to match the electron energy of the ion gas/fluid constituents 40 of the injection gas 38 in order to selectively ionize the ion gas/fluid constituents 40. Examples of the electromagnetic radiation generation in the ionizer 48 can include an oscillating electric field, electromagnetic radiation, alternating magnetic field, and the like and combinations thereof.

The system 10 can include an ion gas reclaimer or simply reclaimer 50. The reclaimer 50 can be configured to extract the ion gas/fluid constituents 40 from the working fluid 32. The reclaimer 50 can be configured to change the ion gas/fluid constituents 40 from a gas phase to a liquid phase. The liquid phase can be transported to the reservoir 46 for storage and reuse. In an exemplary embodiment, the reclaimer 50 can include a negative electrode 52, such as a plate and a positive electrode 54, such as another plate. The reclaimer 50 can be configured to employ a magnetic field to reclaim the ion gas/fluid constituent 40. The rate of extraction by the reclaimer 50 can be configured to maintain a predetermined concentration of the ion gas/fluid constituent 40 in the working fluid 32. There are no limits to the flow rates of the ion gas/fluid constituent 40. A ratio of the flow rates of the ion gas/fluid constituent 40 between the working fluid 32 in the hot side flow passage 18 and the cold side flow passage 24 can be from 0.1 to 100.

The system 10 can include a controller 56. The controller 56 can be in operative communication with any of the temperature sensor 26, pressure sensor 28 and flow rate sensor 30. The controller 56 can be in operative communication with the re-valence/recirculator 36. The controller can be in operative communication with the ion gas reclaimer 50. The controller 56 can be in operative communication with any of the heat exchangers 12 as well as with any flow control devices, such as dampers/valves 58 employed in the operation of the system 10.

The controller 56 may include hardware, firmware, and/or software components that are configured to perform the functions disclosed herein, including the functions of the system 10. While not specifically shown, the controller 56 may include other computing devices (e.g., servers, mobile computing devices, etc.) and subsystems which may be in communication with each other and/or the controller 56 via a communication network 60 to perform one or more of the disclosed functions. The controller 56 may include at least one processor 62 (e.g., a controller, microprocessor, microcontroller, digital signal processor, etc.), memory 64, and an input/output (I/O) subsystem 66. The controller 58 may be embodied as any type of computing device e.g., a server, an enterprise computer system, a network of computers, a combination of computers and other electronic devices, or other electronic devices. Although not specifically shown, the I/O subsystem 66 typically includes, for example, an I/O controller, a memory controller, and one or more I/O ports. The processor 62 and the I/O subsystem 66 are communicatively coupled to the memory 64. The memory 64 may be embodied as any type of computer memory device (e.g., volatile memory such as various forms of random access memory).

The I/O subsystem 66 is communicatively coupled to a number of hardware, firmware, and/or software components, including a data storage device 68, a display 70, a communication subsystem 72, and a user interface (UI) subsystem 74. The data storage device 68 may include one or more hard drives or other suitable persistent storage devices (e.g., flash memory, memory cards, memory sticks, and/or others).

The system may be installed on either a hot and/or a cold side working fluid 32. The system 10 can be used employing multiple heat exchangers 12 simultaneously, in parallel or in series. Different heat exchangers 12 may benefit from different ion gas/fluid constituents 40 with different boiling points and/or different fluid properties. Each ion gas/fluid constituent 40 can be circulated by dedicated vanes within the recirculating pump 42 and/or dedicated recirculating pumps 42. Each ion gas/fluid constituent 40 can be re-charged by the same or dedicated re-valence devices 36.

The ion gas/fluid constituent 40 can be cooled concurrently as the ion gas/fluid constituent 40 is passed through heat exchanger 12. The ion gas/fluid constituent 40 may require heating by the gas turbine engine from a heat source 76 and/or the heating element 44 to maintain temperatures above the boiling point of the ion gas/fluid constituent 40 to avoid condensation in certain locations. The system 10 can employ multiple heating points 76 to prevent condensation. The reclaimer can have a liquid collector 78 fluidly coupled with the reservoir 46. The system 10 may employ various ion liquid recovery points 80 configured to recover the liquid phase of the ion gas/fluid constituent 40.

During the beginning of the gas turbine engine 34 shutdown procedure, the ion fluid pump 42 can stop discharging the ion gas/fluid constituent 40, and the reclaimer can recover as much of the ion gas/fluid constituent 40 as possible before a final engine shutdown.

During startup of the gas turbine engine 34, the heating element(s) 44 may be employed to fully convert the ion gas/fluid constituent 40 to a gaseous state.

A technical advantage of the disclosed ion gas injection and reclamation system includes.

Another technical advantage of the disclosed ion gas injection and reclamation system includes an increase in heat transfer through the heat exchanger.

Another technical advantage of the disclosed ion gas injection and reclamation system includes increasing performance of the heat exchanger.

Another technical advantage of the disclosed ion gas injection and reclamation system includes reducing size, weight and cost of the heat exchanger.

There has been provided an ion gas injection and reclamation system. While the ion gas injection and reclamation system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An ion gas injection and reclamation system comprising:
a heat exchanger fluidly coupled with at least one flow passage;
a re-valence/recirculator fluidly coupled with the at least one flow passage;
an ion fluid reclaimer fluidly coupled with the re-valence/recirculator; and
an injection gas comprising at least one ion fluid constituent fluidly coupled with at least one of the re-valence/recirculator, the ion gas reclaimer and the at least one flow passage.

2. The ion gas injection and reclamation system according to claim 1, wherein the re-valence/recirculator is configured to pump the injection gas into the at least one flow passage.

3. The ion gas injection and reclamation system according to claim 1 or 2, wherein the injection gas includes material properties that increase the density of the working fluid and enhance the heat transfer capacity of the working fluid.

4. The ion gas injection and reclamation system according to any of claims 1 to 3, wherein the ion fluid reclaimer is configured to extract the at least one ion fluid constituent from the working fluid.

5. The ion gas injection and reclamation system according to any of claims 1 to 4, wherein the re-valence/recirculator comprises a heating element, the heating element configured to maintain the working fluid and injection gas at a predetermined temperature.

6. The ion gas injection and reclamation system according to claim 5, wherein the predetermined temperature is configured to maintain constituents of the working fluid and the injection gas in a gaseous state.

7. The ion gas injection and reclamation system according to any of claims 1 to 6, wherein the re-valence/recirculator comprises a reservoir, the reservoir configured to store the ion fluid constituent of the injection gas.

8. The ion gas injection and reclamation system according to any of claims 1 to 7, wherein the re-valence/recirculator comprises an ionizer, the ionizer configured to ionize the ion fluid constituent in the injection gas.

9. A gas turbine engine heat exchanger comprising:
the ion gas injection and reclamation system according to any of claims 1 to 8; and
a controller in operative communication with at least one of the re-valence/recirculator, the ion gas reclaimer and sensors coupled to the at least one flow passage.

10. The gas turbine engine heat exchanger according to claim 8, wherein the at least one flow passage comprises at least one of a hot side flow passage and a cold side flow passage.

11. A process of forming an ion gas injection and reclamation system for a gas turbine engine heat exchanger comprising:
fluidly coupling the gas turbine engine heat exchanger with at least one flow passage;
fluidly coupling a re-valence/recirculator with the at least one flow passage;
fluidly coupling a reclaimer with the re-valence/recirculator;
fluidly coupling an injection gas comprising at least one ion fluid constituent with at least one of the re-valence/recirculator, the ion gas reclaimer and the at least one flow passage;
configuring the re-valence/recirculator to pump the injection gas into the at least one flow passage;
configuring the reclaimer to extract the at least one ion fluid constituent from the working fluid; and
coupling a controller in operative communication with at least one of the re-valence/recirculator, the ion gas reclaimer and sensors coupled to the at least one flow passage.

12. The process according to claim 11, further comprising:
configuring the injection gas with material properties that increase the density of the working fluid and enhance the heat transfer capacity of the working fluid; and/or
further comprising:
forming the re-valence/recirculator with a heating element;
configuring the heating element to maintain the working fluid and injection gas at a predetermined temperature; and
configuring the predetermined temperature to maintain constituents of the working fluid and the injection gas in a gaseous state.

13. The process according to claim 11 or 12, further comprising:
forming the re-valence/recirculator with a reservoir; and
configuring the reservoir to store the ion fluid constituent of the injection gas; and/or
further comprising:
forming the re-valence/recirculator with an ionizer; and
configuring the ionizer to ionize the ion fluid constituent in the injection gas.

14. The process according to any of claims 11 t 13, further comprising:
during a gas turbine engine shutdown procedure, ceasing the discharge of the at least one ion fluid constituent into the at least one flow passage; and
recovering the ion fluid constituent with the reclaimer before a final engine shutdown.

15. The process according to any of claims 11 to 14, further comprising:
during a gas turbine engine startup, heating the ion fluid constituent to fully convert the ion fluid constituent to a gaseous state.
